# EUROPEAN PATENT APPLICATION

(11) **EP 4 575 616 A1**
(43) Date of publication of application: **25.06.2025**
(21) Application number: 23854768.1
(22) Date of filing: 21.07.2023
(51) Int. Cl.: G02C 7/06

(54) **SPECTACLE LENS FOR SUPPRESSING PROGRESSION OF REFRACTIVE ERROR**

(30) Priority: 17.08.2022 JP 2022130047
(71) Applicant: Tokai Optical Co., Ltd., Okazaki-shi, Aichi 444-2192 (JP)
(72) Inventor: SUZUKI Eiji, Okazaki-shi, Aichi 444-2192 (JP)
(74) Representative: Cabinet Beau de Loménie
(86) International application number: PCT/JP2023/026730
(87) International publication number: WO 2024/038731

(57) **Abstract**

[Abstract] A spectacle lens for suppressing the progression of refractive error is provided that is high in the capability of suppressing the progression of refractive error and that is provided with predetermined refractive power for normal correction of refractive error.

[Solution] The spectacle lens has, around an optical center region 22 to which predetermined refractive power for correction of refractive error has been added, an optical region 23 having refractive power differing from the refractive power of the optical center region 22, and the optical region 23 is continuously placed in a mesh shape around a large number of island-shaped regions 24 that have the same refractive power as the refractive power of the optical center region 22 and that are arranged so as to be separated from each other.

## Description

### Technical Field

The present invention relates to a spectacle lens for suppressing the progression of refractive error including regions having two different focal distances, i.e., an optical center region etc., to which predetermined refractive power for correction of refractive error has been added and an optical region for suppressing the progression of refractive error that does not contribute to correction of refractive error.

### Background Art

An invention has been conventionally proposed that is a spectacle lens for suppressing the progression of wearer's refractive error and in which an optical element (optical region) having a function not to focus on a retina is placed in a concentric circular region surrounding the optical center. Patent Literature 1 is shown as an example of this spectacle lens. In Patent Literature 1, a ring body 14 having micro-lenses connected together on a concentric circle is arranged as in, for example, FIG. 12 of Patent Literature 1. This part of these micro-lenses is a region whose refractive power differs greatly from the refractive power of the other parts. This part of these micro-lenses contributes as an optical region for suppressing the progression of refractive error.

### Citation List

### Patent Literature

Patent Literature 1: Japanese Translation of PCT International Application No. 2021-524051

### Summary of Invention

### Technical Problem

However, in this type of conventional spectacle lens for suppressing the progression of refractive error, a region for correction of refractive error used in eyeglasses has been fundamentally set as a base, and an optical region for suppressing the progression of refractive error has been provided only as an auxiliary, and therefore it is undeniable that the capability of suppressing the progression of refractive error is unsatisfactory. Therefore, a spectacle lens for suppressing the progression of refractive error has been required that has both high capability of suppressing the progression of refractive error and predetermined refractive power for normal correction of refractive error.

### Solution to Problem

To solve the aforementioned problem, in means 1, a spectacle lens has, around an optical center region to which predetermined refractive power for correction of refractive error has been added, an optical region having refractive power differing from the refractive power of the optical center region, and the optical region is continuously placed in a mesh shape around a plurality of island-shaped regions that have the same refractive power as the refractive power of the optical center region and that are arranged so as to be separated from each other.

With this spectacle lens, the optical region for suppressing the progression of refractive error is continuously placed in a mesh shape outside the optical center region for correction of refractive error, and the region in which a focus depth has been extended becomes continuous and is not easily interrupted, thus making it possible to provide a spectacle lens for suppressing the progression of refractive error while having high effect of suppressing the progression of refractive error.

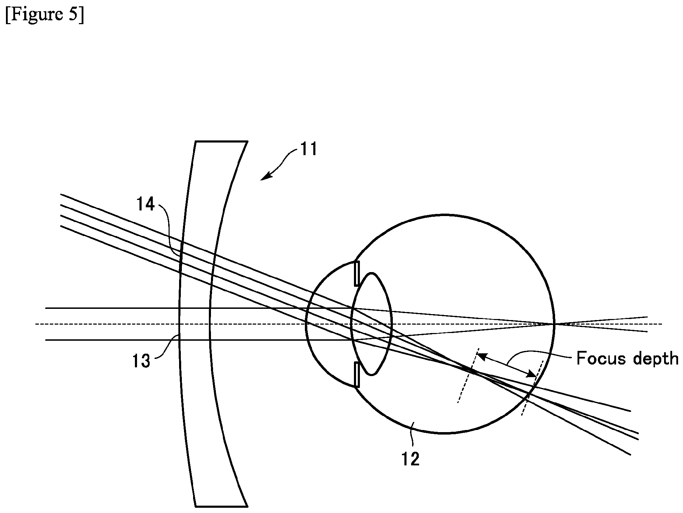

The term "optical region" denotes a region that is placed around the optical center region to which predetermined refractive power for correction of refractive error has been added and that has refractive power differing from that of the optical center region. Additionally, the optical region is a region in which the focus depth has been extended more than the optical center region (and a region having the same refractive power as the optical center region) because of astigmatism and that is used to suppress the progression of refractive error. Therefore, as a result, the optical region is provided with positive refractive power in various directions, and a part of a ray of light passing therethrough is imaged at a position other than the retina. The outline of the focus depth will be described with reference to FIG. 5. FIG. 5 is a simulation view in which an optical path of a ray of light that has passed through a spectacle lens 11 is shown in a section passing through an optical axis of an eyeball 12 between the spectacle lens 11 belonging to the present invention and the eyeball 12 of a wearer who is wearing this spectacle lens 11. The spectacle lens 11 is capable of focusing light on the retina in a region having the same refractive power as that of an optical center region 13 to which predetermined refractive power for correction of refractive error has been added. On the other hand, refractive power differing from that of the optical center region is given to an optical region 14, and therefore the focus depth because of astigmatism occurs in a ray of light that has passed through the optical region 14 and that travels in the direction of the retina.

In FIG. 5, the optical region 14 is in a state in which relatively-plus refractive power has been given with respect to the optical center region 13, and therefore a ray of light that passes through this region is in a state in which the focus depth has been extended more inwardly than the retina. Herein, a focal range in which a point-image distribution range in an image plane going straight to a ray of light is smaller than a predetermined range is referred to as a focus depth. Herein, relatively-plus refractive power has been given, and therefore light is focused inside, and the focus depth is extended more inwardly than the retina, and yet there is a case in which the focus depth is extended more outwardly than the retina if the refractive power of the optical region 14 is set so that light is focused more outwardly than the retina.

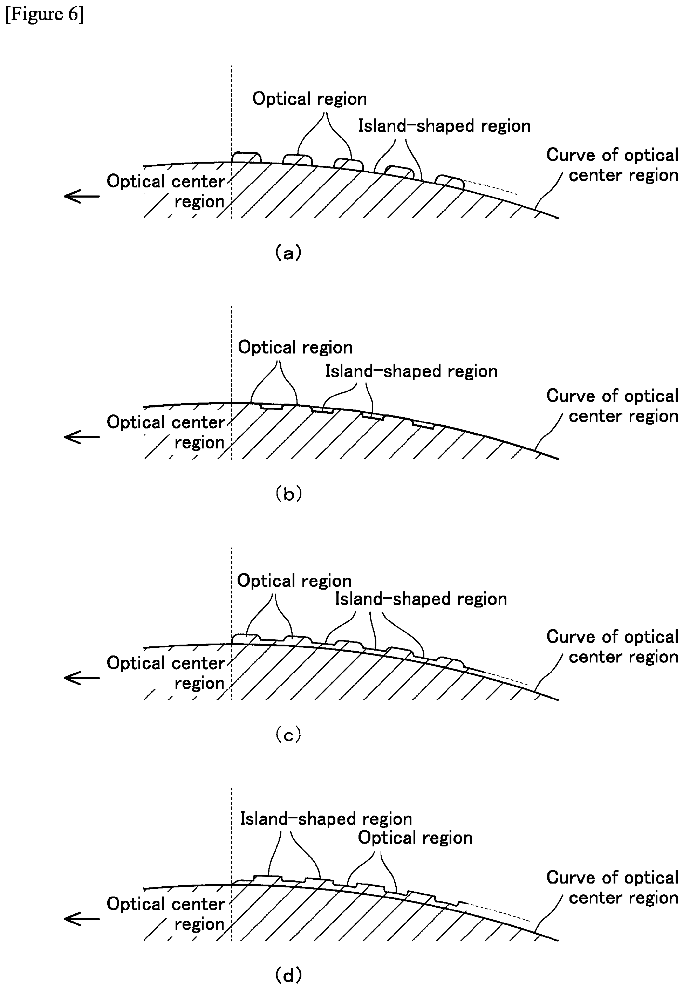

The optical region may be formed so as to protrude more largely than a surface that has extended the curve of the optical center region as shown in, for example, FIG. 6 (a) and FIG. 6(c), or may slightly deform the surface that has extended the curve of the optical center region as shown in FIG. 6(b). Additionally, the optical region is not necessarily required to be formed so as to bulge like an actual island, and may be on an extension of the curve of the optical center region (on the base surface) as shown in, for example, FIG. 6(a), or may be formed at a place that is lower by one step than the base surface that has extended the curve of the optical center region as shown in, for example, FIG. 6(b).

Additionally, the island-shaped region may be formed so as to protrude from the base surface that has extended the curve of the optical center region as shown in FIG. 6(c), or the island-shaped region may be formed so as to protrude more outwardly than the optical region (so as to further bulge) as shown in, for example, FIG. 6(d).

In other words, the island-shaped region may bulge like an actual island, and it is not necessarily required to bulge like an island, and, in brief, what is required is an arrangement in which each island-shaped region is small independent region surrounded by the optical region. It is preferable for a junction part between the island-shaped region and the optical region to become a smooth curve.

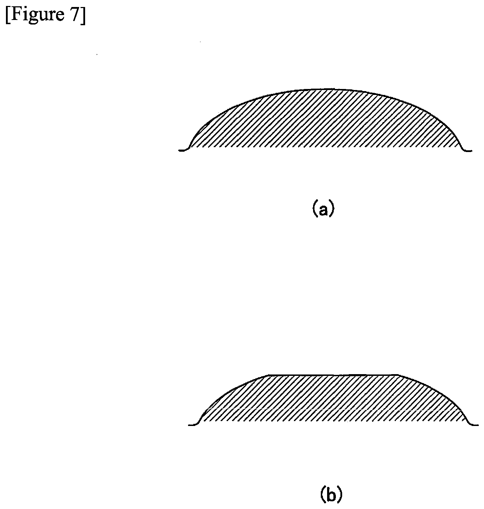

The shape of the optical region may be a cylindrical curve shape as a whole like the cross section of FIG. 7(a), or only an inclined surface may be a cylindrical curve shape like the cross section of FIG. 7(b).

For the spectacle lens of the present invention, for example, a semi-finished blank as a precursor lens may be cut by using a processing device, such as an NC unit, and by inputting processing data and controlling a computer according to a program, or the spectacle lens of the present invention may be produced by using, for example, a lens mold of the spectacle lens and by making a cast of the lens and performing resin molding. Additionally, the semi-finished blank itself is produced by casting, and therefore the semi-finished blank and the cutting process may be combined. For example, this is a case in which an optical region is formed on either a front surface or a back surface by casting and the remaining surface is subjected to a cutting process according to the lens diopter power of a wearer. For example, if an optical region is formed on a front surface of the lens by casting, it is recommended to process a back surface of the lens according to the lens diopter power of a wearer.

Additionally, in means 2, a refractive-error-progression suppressing region in which the optical region and the plurality of island- shaped regions cross each other are arranged so as to surround the optical center region in a ring shape.

The refractive-error-progression suppressing region becomes rotationally symmetric by surrounding the optical center region in this way, and various needless aberrations that have the possibility of occurring in the lens do not easily occur.

Additionally, in means 3, a distance between an inner diameter and an outer diameter of the ring-shaped refractive-error-progression suppressing region is set so as to be 1 to 20 mm.

It is preferable to have such a distance as mentioned above (i.e., width of the refractive-error-progression suppressing region). The reason is that, if the refractive-error-progression suppressing region is narrower than 1 mm, there is a possibility that the extended focus depth will be imperceptible to the human eyes, and, on the other hand, unless it is equal to or less than 20 mm, there is a possibility that the correction of refractive error of a region having the same refractive power as that of the optical center region will be obstructed when miosis occurs.

Additionally, in means 4, the outer diameter of the ring-shaped refractive-error-progression suppressing region is set so as to be equal to or more than 30 mm.

Additionally, in means 5, the optical region is configured to have minus refractive power equal to or more than - 1.0 D with respect to refractive power of an optical center in spherical equivalent refractive power.

Additionally, in means 6, the optical region is configured to have plus refractive power equal to or more than + 1.0 D with respect to the refractive power of the optical center in the spherical equivalent refractive power.

Additionally, in means 7, the plurality of island- shaped regions are arranged in an orderly manner so as to be mutually equally spaced out.

Additionally, in means 8, the island-shaped region is formed so as to have a polygonal shape in a plan view.

It is preferable to employ, for example, any one of a triangle to an octagon as the polygonal shape, and the plurality of island-shaped regions may be a combination of the polygons without being limited to the same shape. The reason is that there is a possibility that such a combination may enable the optical region to be arranged in a balanced way in a mesh shape. It is preferable to employ a regular polygonal shape as the polygonal shape.

Additionally, in means 9, the island-shaped region is formed so as to have a regular hexagonal shape in the plan view.

The reason is that the employment of a regular hexagonal shape as the shape of the island-shaped region enables the formation of orderly mesh shapes joined together at an angle of 120 degrees around the island-shaped region.

The inventions shown in the respective means described above can be arbitrarily combined. For example, at least part of the configuration of at least one of the inventions of the means 2 and subsequent means may be added to the whole or part of the configuration of the invention shown in the means 1. In particular, at least part of the configuration of at least one of the inventions of the means 2 and subsequent means is preferably added to the invention shown in the means 1. It is also possible that arbitrary configurations are extracted from the inventions shown in the means 1 to the means 9, and the extracted configurations are combined. The applicant of the present application has the intention to acquire the rights to the inventions including these configurations.

### Advantageous Effects of Invention

If a spectacle lens for suppressing the progression of refractive error of the present invention is employed, an optical region for suppressing the progression of refractive error is continuously placed in a mesh shape outside an optical center region for correction of refractive error, and, as a result, a region in which a focus depth has been extended becomes continuous and is not easily interrupted, thus making it possible to provide a spectacle lens for suppressing the progression of refractive error while having high effect of suppressing the progression of refractive error.

### Brief Description of Drawings

[FIG. 1] FIG. 1 is a plan view describing an enlarged optical region that is placed outside an optical center region in a spectacle lens of an embodiment of the present invention.
[FIG. 2] FIG. 2 is a partially enlarged view showing a part of a refractive-error-progression suppressing region surrounded in which the optical region and island-shaped regions cross each other.
[FIG. 3] FIG. 3 (a) is a descriptive view describing each outline shape of the optical region and the island-shaped region in a section along line A-A of FIG. 2, and FIG. 3 (b) is a descriptive view describing each outline shape of the optical region and the island-shaped region in a section along line B-B of FIG. 2.

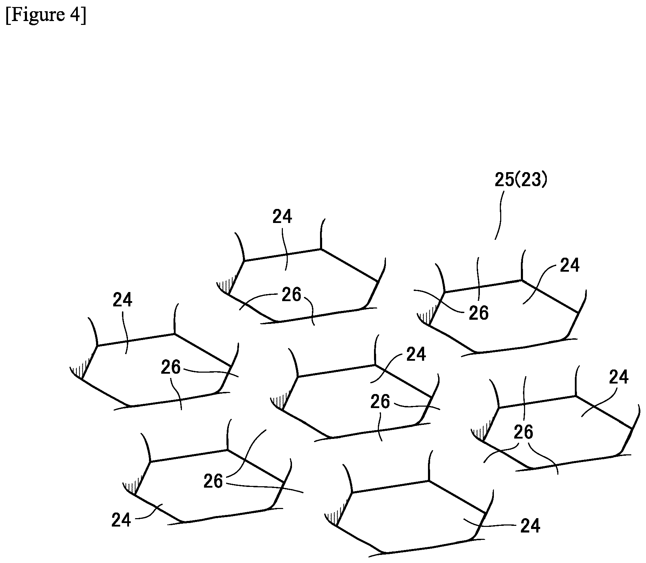

[FIG. 4] FIG. 4 is a perspective view showing a part of the refractive-error-progression suppressing region enlarged in which the optical region and the island-shaped regions cross each other.
[FIG. 5] FIG. 5 is a descriptive view simulating and describing an outline of a focus depth in the spectacle lens of the present invention.
[FIG. 6] FIGS. 6 (a) to 6(d) are descriptive views each of which describes a positional relationship with respect to a lens curve when the optical region and the island-shaped region are formed.
[FIG. 7] FIGS. 7 (a) and 7 (b) are sectional views each of which describes an example of the shape of the optical region.

A detailed embodiment of a spectacle lens will be hereinafter described with reference to the drawings.

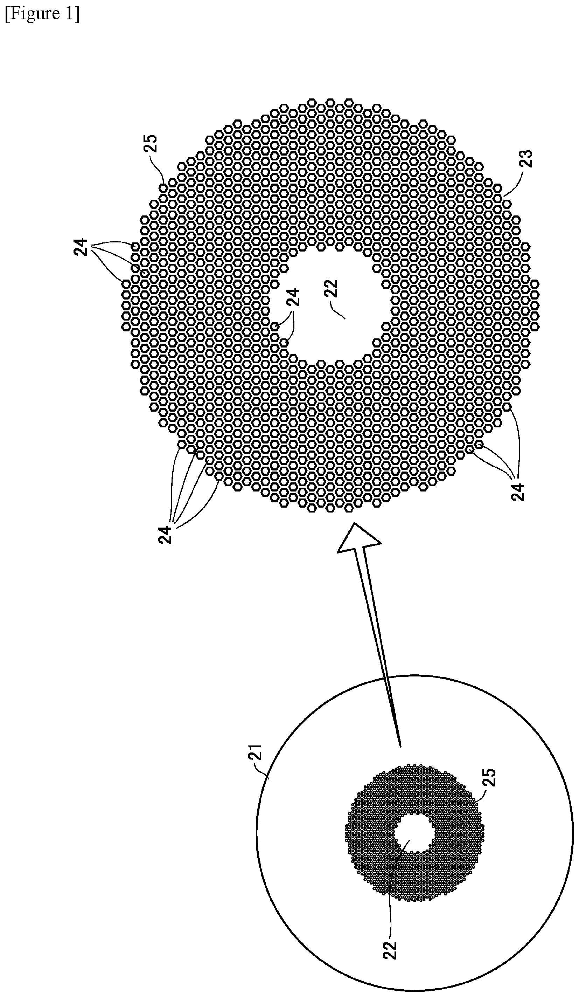

A spectacle lens 21 for suppressing the progression of refractive error (which is hereinafter referred to simply as the spectacle lens 21) shown in FIG. 1 is a meniscus-lens-shaped SV (single-vision) lens that is produced by using a lens mold, making a cast of the lens, and performing resin molding and whose external shape is circular and that is a so-called round lens before being put into a frame. A base curve is set on a front surface side. The spectacle lens 21 is cut into a frame shape (lens shape) according to user's desire at a manufacturer or at an optician's store.

Essential information about the spectacle lens 21 of the present embodiment is as follows.
Curvature radius of base surface (front surface) = 163.44 mm
Curvature radius of lens back surface = 105.56 mm
Prescribed lens diopter power S2.00D C0.00D

Predetermined refractive power prescribed for a wearer has been given to an optical center region 22 of the spectacle lens 21. An optical region 23 and a plurality of island-shaped regions 24 crossing each other are arranged as a ring-shaped refractive-error-progression suppressing region 25 around the optical center region 22 on the lens front surface. In this embodiment, a diameter of the optical center region 22 is set at 10 mm, and a width of the ring of the ring-shaped refractive-error-progression suppressing region 25 is set at 12.5 mm, and an outer diameter of the ring is set at 35 mm.

The optical region 23 is formed such that ridgy long lens portions 26, each of which is formed in a cylindrical shape, are joined together at an angle of 120 degrees at the center of the island-shaped regions 24, which is a position of three regular triangles, and are connected together in a mesh shape as a whole in a state in which each of the long lens portions 26 is placed at each side of the regular hexagonal island- shaped region 24.

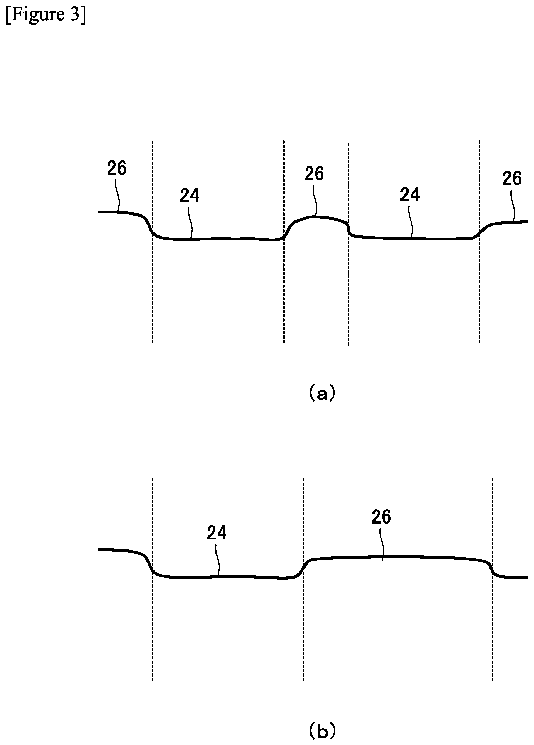

Each of the long lens portions 26 takes a domical convex lens shape in a sectional direction of line A-A (cross-sectional direction) as shown in FIG. 3(a), and has an equal height in a sectional direction of line B-B (longitudinal sectional direction) as shown in FIG. 3(b), and the long lens portions 26 are formed cylindrically in a long ridgy shape as a whole. In this embodiment, the refractive power of the long lens portion 26 is designed so as to have plus cylinder refractive power of about +9.0 D with respect to the refractive power of the optical center.

Each of the long lens portions 26 is set at roughly 300 µm in width, and is formed so as to protrude upwardly (outwardly) by roughly 0.3 µm on the basis of a curve surface extended from the optical center region 22. The optical region 23 does not contribute to correction of refractive error, and serves as a region for suppressing the progression of refractive error. The island-shaped region 24 has the same curve (refractive power) as the optical center region 22, and serves as a part that contributes to correction of refractive error.

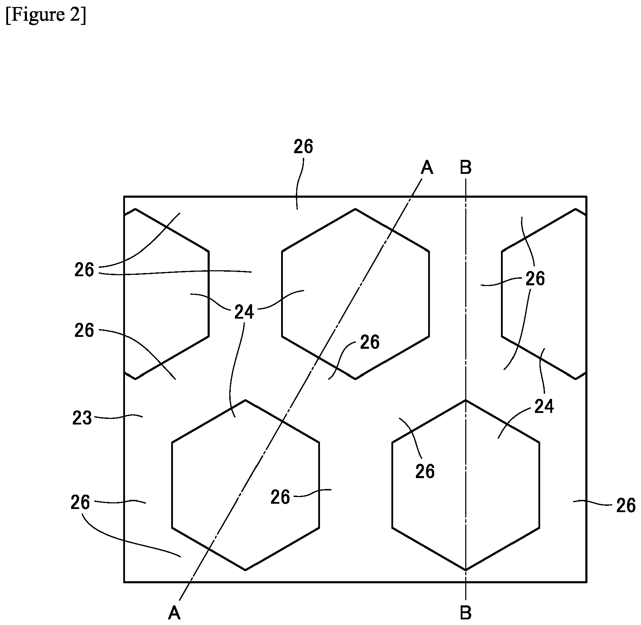

The plurality of island-shaped regions 24 are arranged in an orderly manner vertically and horizontally so as to be equally spaced out while crossing the optical region 23 as shown in FIG. 2 and FIG. 3. A side of the island-shaped region 24 having a regular hexagonal shape is set at roughly 600 µm. The island-shaped region 24 is formed on the curve surface extended from the optical center region 22, and its refractive power is the same as the optical center region 22.

If the spectacle lens 21 of the above configuration is employed, the spectacle lens 21 has a region continuous in a mesh shape for suppressing the progression of refractive error, and therefore the region in which the focus depth has been extended is continuous and not easily interrupted in comparison to a conventional independent region for suppressing the progression of refractive error, improving the effect of suppressing the progression of refractive error. Additionally, the island-shaped region 24 has a regular hexagonal shape, and therefore the three long lens portions 26 that form the optical region 23 therearound are enabled to be joined together at the angle of 120 degrees along the island-shaped region 24 so as to form an orderly mesh shape.

A subject was allowed to wear this spectacle lens 21 to compare a spectacles-wearing sensation against a spectacle lens with another design to suppress the progression of refractive error. In detail, it is a spectacle lens in which the refractive power of the island-shaped region 24 of the spectacle lens 21 and the refractive power of the optical region 23 of the spectacle lens 21 are reversed, and a part of the island-shaped region is a region for suppressing the progression of refractive error, and a region connected in a mesh shape therearound is arranged so as to become equal to the refractive power of the optical center region.

As a result of a comparison between them concerning a spectacles-wearing sensation, the shape of the optical region having plus refractive power is more irregular in the spectacle lens 21 of this embodiment than in the other spectacle lens, and therefore, when a nearby place is viewed, the eye lens is sufficiently adjusted unlike a visual perception obtained when viewed through a plus dioptric power lens, and it became possible to achieve the effect of reducing the formation of an image behind the retina that is regarded as one factor causing the near-sightedness. Therefore, it has been understood that the effect of suppressing the progression of refractive error is promised more.

The aforementioned embodiment has been described merely as an example of a concrete embodiment to show the principle and concept of the present invention. That is, the present invention is not limited to the aforementioned embodiment. The present invention can also be embodied by, for example, the following modifications.
- The conditions in the aforementioned embodiment, such as the size (diameter) of the optical center region 22 or the width of the optical region 23, can be appropriately changed. Additionally, the lens diameter can also be appropriately changed, and, in accordance with the change of the lens diameter, the conditions, such as the size (diameter) of the optical center region 22 or the width of the optical region 23, are appropriately changed.
- The size of the optical region 23 or the size of the island-shaped region 24 has been described as an example above, and can be appropriately changed.
- Although the island-shaped region 24 of the aforementioned embodiment was formed to have a regular hexagonal shape, it may have another shape if there is no obstacle in the lens effect of the optical region 23. For example, the island-shaped region 24 may have a circular shape, a regular triangular shape, a regular pentagonal shape, or a combination of different shapes.
- Although the island-shaped region 24 was equal in height to the optical center region 22 in the aforementioned embodiment, the island-shaped region 24 is not necessarily required to be equal in height to the optical center region 22 if they have the same refractive power. For example, the optical region 23 may be formed so as to be substantially equal in height to the optical center region 22, and the island-shaped region 24 may be formed so as to be hollowed with respect to the optical center region 22, or, on the contrary, the island-shaped region 24 may be formed so as to protrude.
- Although the embodiment has been described on the supposition that the focus depth is on the plus side, the present invention can also be designed with the same design concept in a case in which the focus depth is on the minus side. Additionally, although the refractive power corrected above was that of a minus lens, the refractive power may be that of a plus lens.

The present invention is not limited to the configuration according to the aforementioned embodiment. Components of each embodiment and of each modification may be arbitrarily selected and combined. Arbitrary components of each embodiment and of each modification may be arbitrarily combined with arbitrary components described in the Solution to Problem or components embodying the arbitrary components described in the Solution to Problem. The applicant also intends to acquire the rights to these in an amendment or a divisional application of the present application.

In addition, the applicant has the intention to acquire the rights to the whole design or a partial design by changing the application to a design application. In the drawings, the entirety of the apparatus concerned is drawn by a solid line, and the drawings include not only the whole design but also a partial design to be claimed for a part of the apparatus. For example, as well as a part of members of the apparatus as a partial design, the drawings also include a part of the apparatus as a partial design independently of the members. A part of the apparatus may be a part of members of the apparatus, or a part of the member.

### Reference Signs List

21 ... Spectacle lens for suppressing the progression of refractive error, 22 ... Optical center region, 23 ... Optical region, 24 ... Island-shaped region

## Claims

1. A spectacle lens for suppressing the progression of refractive error, wherein the spectacle lens has, around an optical center region to which predetermined refractive power for correction of refractive error has been added, an optical region having refractive power differing from the refractive power of the optical center region, and the optical region is continuously placed in a mesh shape around a plurality of island-shaped regions that have the same refractive power as the refractive power of the optical center region and that are arranged so as to be separated from each other.

2. The spectacle lens for suppressing the progression of refractive error according to claim 1, wherein a refractive-error-progression suppressing region in which the optical region and the plurality of island- shaped regions cross each other surrounds the optical center region in a ring shape.

3. The spectacle lens for suppressing the progression of refractive error according to claim 2, wherein a distance between an inner diameter and an outer diameter of the ring-shaped refractive-error-progression suppressing region is set at 1 to 20 mm.

4. The spectacle lens for suppressing the progression of refractive error according to claim 2, wherein the outer diameter of the ring-shaped refractive-error-progression suppressing region is equal to or more than 30 mm.

5. The spectacle lens for suppressing the progression of refractive error according to claim 2, wherein the optical region has minus refractive power equal to or more than -1.0 D with respect to refractive power of an optical center in spherical equivalent refractive power.

6. The spectacle lens for suppressing the progression of refractive error according to claim 2, wherein the optical region has plus refractive power equal to or more than +1.0 D with respect to the refractive power of the optical center in the spherical equivalent refractive power.

7. The spectacle lens for suppressing the progression of refractive error according to any one of claim 1 to claim 6, wherein the plurality of island-shaped regions are arranged in an orderly manner so as to be mutually equally spaced out.

8. The spectacle lens for suppressing the progression of refractive error according to claim 7, wherein the island-shaped region is formed in a polygonal shape in a plan view.

9. The spectacle lens for suppressing the progression of refractive error according to claim 8, wherein the island-shaped region is formed in a regular hexagonal shape in the plan view.
